# EUROPÄISCHE PATENTSCHRIFT

(11) **EP 1 378 472 B1**
(45) Veröffentlichungstag und Bekanntmachung des Hinweises auf die Patenterteilung: **19.03.2008**
(21) Anmeldenummer: 02405554.3
(22) Anmeldetag: 02.07.2002
(51) Int. Cl.: B65H 31/30, B65G 61/00, B65B 27/08

(54) **Einrichtung zum Transport eines in einer Zusammentragmaschine aus stehend aneinandergereihten Druckbogen gebildeten, auf einer Auflage liegenden Stapels**
Device for transporting a stack of juxtaposed printed sheets standing on edge, lying on a support
Dispositif pour transporter une pile de feuilles imprimées, juxtaposées sur chant, reposant sur un support

(43) Veröffentlichungstag der Anmeldung: 07.01.2004
(73) Patentinhaber: Müller Martini Holding AG, 6052 Hergiswil (CH)
(72) Erfinder: Keller, Christof, 4800 Zofingen (CH)

(56) Entgegenhaltungen:
- EP-A- 0 339 002
- EP-A- 0 623 542
- US-A- 4 419 035
- US-A- 4 674 934
- PATENT ABSTRACTS OF JAPAN vol. 1996, no. 09, 30. September 1996 (1996-09-30) -& JP 08 113210 A (DAINIPPON PRINTING CO LTD), 7. Mai 1996 (1996-05-07)

## Beschreibung

Die Erfindung betrifft eine Einrichtung zum Transport eines in einer Sammelvorrichtung aus stehend aneinandergereihten Druckbogen gebildeten, liegenden Stapels, von einer Stapelauflage in eine Zwischenablage.
Einrichtungen dieser Art werden zur Entsorgung von sog. Stangenauslegern gemäss EP 0 623 542 A1 und EP 1 199 275 A1 verwendet.
Eine bekannte Entsorgung eines Stangenauslegers 327 vermittelt ein Prospekt 327.889 MÜLLER MARTINI. Die auf dem Stangenausleger produzierten liegenden Stapel aus stehend aneinandergereihten Druckbogen werden auf einer Auflage zusammengetragen resp. gesammelt, zusammengepresst und umreift. Danach werden die fertigen Stangen resp. Stapel manuell, seitlich über einen Rollentisch von der Auflage verschoben und anschliessend von einem Kran erfasst und auf Paletten abgesetzt.

Im gleichen Prospekt ist auch eine Ausführung dargestellt, bei der im Anschluss an einen Rollentisch ein Palettierautomat angeordnet ist.

Bei diesen Anlagen werden die zu einem losen Stapel zusammengetragenen Druckbogen am Förderende der Stapelauflage zusammengepresst sowie umreift und danach von einem Hebezeug ausserhalb der Umreifungsstation erfasst.
Dies bedingt sowohl eine Zange für den Press- und Umreifungsvorgang im Stangenausleger wie auch eine weitere Zange für den Transport des abgebundenen Stapels in die Zwischenablage.

Aufgabe der vorliegenden Erfindung ist es nun, eine Einrichtung der eingangs genannten Art zu schaffen, mit der ein mehrfacher Aufwand vermieden werden kann.

Erfindungsgemäss wird diese Aufgabe dadurch gelöst, dass oberhalb der Stapelauflage eine den Stapel an den Enden zusammenpressende, senkrecht und horizontal verfahrbare Zange angeordnet ist, die den Stapel nach dessen Umreifung auf der Stapelauflage (5) von der Stapelauflage in die benachbarte Zwischenablage überführt.

Dieser Vorschlag gestattet eine Ausführung, bei der die Umreifung eines Stapels auf der Stapelauflage wie auch neben dieser möglich ist.

Selbstverständlich eignet sich die erfindungsgemässe Einrichtung in Förderrichtung der Druckbogen betrachtet sowohl links wie auch rechts von der Stapelauflage, sodass ein Transport nach beiden Seiten möglich ist.

Die erfindungsgemässe Einrichtung kann rechnergesteuert -ohne Bedienungspersonen- den Transport der Stapel von der Stapelauflage zu der Zwischenablage automatisch durchführen. Anschliessend wird die Erfindung mit Bezugnahme auf die Zeichnung, auf die bezüglich aller in der Beschreibung nicht näher erwähnten Einzelheiten verwiesen wird, anhand eines Ausführungsbeispiels erläutert. Es zeigen in der Zeichnung:
- Fig. 1: eine räumliche Darstellung der erfindungsgemässen Einrichtung,
- Fig. 2: eine Seitenansicht der in Fig. 1 dargestellten Einrichtung und
- Fig. 3: einen Grundriss der in Fig. 2 gezeigten Einrichtung.

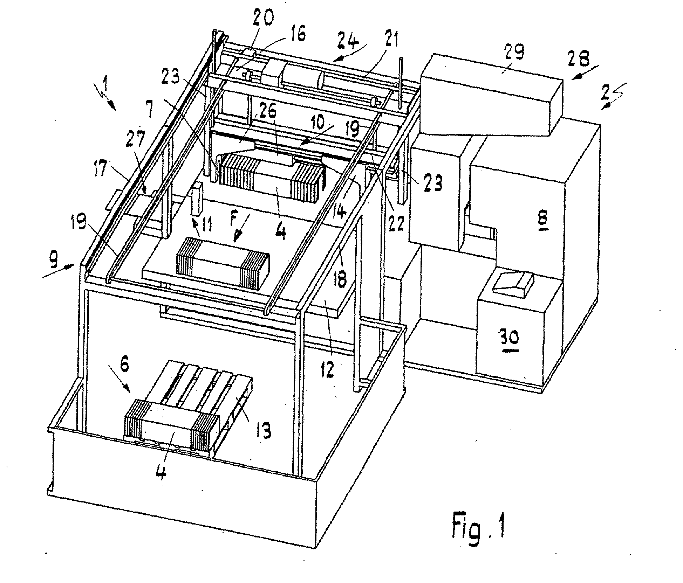

In den Fig. 1 bis 3 ist eine Einrichtung 1 veranschaulicht, mit welcher in einer Zusammentragmaschine 2 aus stehend aneinandergereihten Druckbogen 3 gebildete Stapel 4 von einer Stapelauflage 5 in eine Zwischenablage 6 transportierbar sind, wobei die Druckbogen 3 auf diesem Weg senkrecht zur Stapelbildungsrichtung zusammengepresst und umreift werden.
Zuvor werden die Druckbogen 3 wie in der EP 1 199 275 A1 offenbart in geschuppter Formation über eine Umlenkvorrichtung 8 der Stapelauflage 5 zugeführt und an einem sich fortbewegenden vorderen Stützelement 7 aneinandergereiht aufgestellt, bis ein folgendes Stützelement den Stapel 4 an dem hinteren Ende abschliesst. Danach erreicht der lose Stapel 4 seine Endposition auf der Stapelauflage 5. Diese Situation wird durch die Fig. 1 bis 3 vermittelt.

Zur Ueberführung des Stapels 4, der schon auf der Stapelauflage 5 umreift werden könnte, ist oberhalb der Stapelauflage 5 eine an einem Traggestell 9 verfahrbare Zange 10 vorgesehen, die den Stapel 4 an den Enden zusammenpresst und nach dem Anheben von der Stapelauflage 5 in eine benachbarte Umreifungsstation 11 versetzt, wo er von einem Band (nicht ersichtlich) umfasst weiter auf einen Ablagetische 12 oder in die Zwischenablage 6 versetzt wird. In der Zwischenablage 6 steht eine Palette 13 bereit, auf der die Stapel 4 neben- und übereinander abgelegt werden. Der Weitertransport erfolgt mit einem Hubwagen oder -stapler. Selbstverständlich könnte anstelle einer oder mehrerer Paletten 13 auch ein beladbares Fahrzeug beigestellt werden. Die aus zwei Klemmbacken 14, 15 gebildete Zange 10 ist mittels Brückenträger 16, der an einem Traggestell quer zu seiner Längserstreckungen in einer ersten Förderrichtung 7 von der Stapelauflage 5 in die Zwischenablage 6 verfahrbar angeordnet. Wie schon bemerkt, kann die Zwischenablage 6 als Palettierautomat ausgebildet sein. Deshalb ist die Zange 10 quer zur ersten Förderrichtung F verfahrbar an dem Brückenträger 16 angeordnet.
Um eine kreuzweise Lagerung der Stapel 4 in der Zwischenablage 6 vorsehen zu können, ist die Zange 10 um eine senkrechte Achse drehbar ausgebildet.
Der Brückenträger 16 weist an den Enden Laufrollen (nicht dargestellt) auf, die in seitlichen Bahnträgern 17, 18 laufend gelagert sind. Der Brückenträger 16 ist mit zwei umlaufenden Zugmitteln 19 verbunden, die parallel zur ersten Förderrichtung F von einem am Traggestell 9 befestigten Elektromotor 20 angetrieben sind. Zur Uebertragung einer gleichmässigen Drehbewegung auf beide Zugmittel 19 ist eine gemeinsame Antriebswelle 21 vorgesehen, an der jeweils einem Zugmittel 19 zugeordnete Pulleys befestigt sind, an denen ein Zahnriemen umläuft.

Die Klemmbacken 14, 15 der Zange 10 wiederum sind an einem unterhalb des Brückenträgers 16 höhenverstellbaren Trägern 22 verstellbar befestigt. D.h. der Träger 22 ist an senkrechten Auslegern 23, die an dem Brückenträger 16 befestigt sind, geführt. Das Anheben und Absenken des Trägers 22 erfolgt mittels einem windenähnlichen Aufzug 24, der auf dem Brückenträger 16 befestigt ist. Die Steuerung der Höhe der Zange 10 erfolgt durch einen Drehgeber und als Halteelemente sind Zugbänder 25 vorgesehen.
Die Zange 10 wird durch eine am Träger 22 befestigte Kolben-Zylinder-Einheit 26 betätigt. D.h., die unbewegliche Klemmbacke 15 ist auf das vordere Ende des Stapels 4 ausgerichtet, sodass die Zange 10 nurmehr durch eine Klemmbacke 14 geöffnet wird. Dies schliesst jedoch nicht aus, dass die Position der unbeweglichen Klemmbacke 15 verändert werden kann.
Die Funktionsweise der Einrichtung 1 erlaubt es alternativ, dass der Stapel 4 auf der Stapelauflage 5 in unterschiedlichen Position von der Zange 10 erfasst werden kann und in der Zwischenablage 6 versetzt zur Aufnahmeposition abgesetzt wird. Somit ist es zweckmässig, wenn beide Klemmbacken 14, 15 der Zange 10 antreibbar sind, d.h. jeder Klemmbacke 14, 15 ist beispielsweise eine Kolben-Zylinder-Einheit zugeordnet, die gemeinsam betätigt werden. Hierbei ist es vorteilhaft, wenn die Klemmbacken 14, 15 etwa symmetrisch auf den Stapel 4 ausgerichtet werden oder dass die Lage des Stapels 4 detektiert wird und die Klemmbacke danach gesteuert werden.

Als weitere Möglichkeit könnten die Klemmbacken 14, 15 durch ein an dem Träger 22 befestigtes Zahnstangengetriebe betätigt werden, beispielsweise so, dass ein zwischen den Klemmbacken 14, 15 angeordnetes Zahnrad auf zwei sich gegenüberliegende Zahnstangen einwirkt, die mit jeweils einer Klemmbacke 14, 15 verbunden sind.

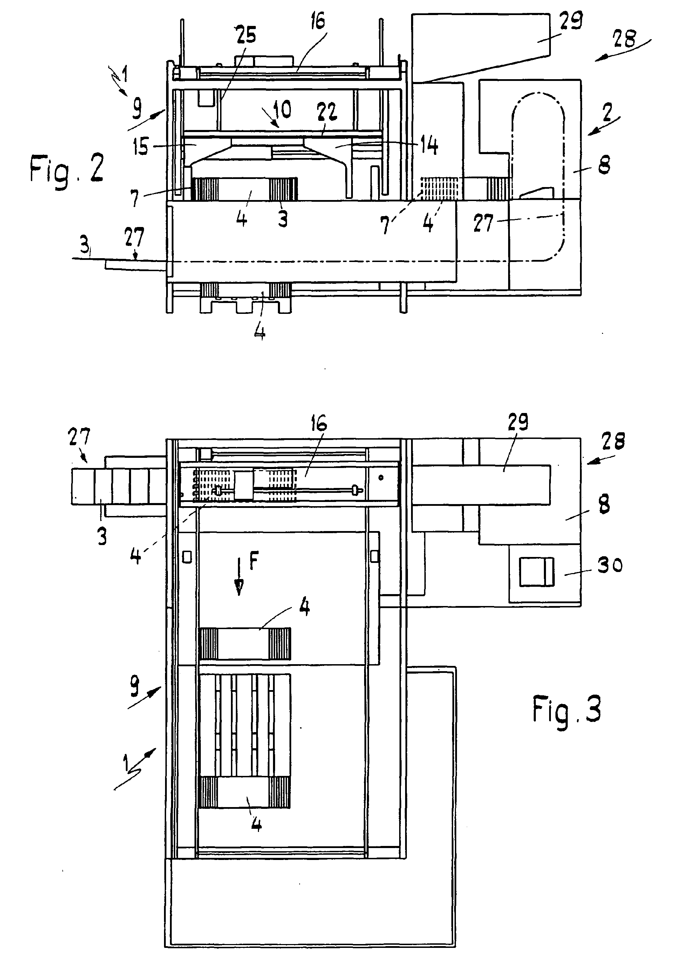

Des weiteren zeigen die Figuren 1 bis 3 in schematischer Anordnungsweise zur Einrichtung 1 einen als Sammelvorrichtung 2 bezeichneten Stangenausleger, dem unterschlächtig ein Schuppemstrom 27 aus Druckbogen 3 zugeführt werden, die von einer Druckmaschine (nicht ersichtlich) in den Stangenausleger einlaufen und an der gegenüberliegenden Seite über eine Umlenkvorrichtung 8 gewendet werden. Im Anschluss an die Umlenkvorrichtung 8 mündet der gewendete Schuppenstrom 27 in eine Stapelauflage 5, auf der sich ein Stapel 4 aus auf dem Falz stehenden Druckbogen 3 in horizontaler Richtung entwickelt. Die Figuren 1 und 2 zeigen an dieser Stelle einen unvollkommenen Stapel 4, der eine Brettereinschubstation 28 erreicht hat, durch welche das vordere und hintere Ende eines Stapels 4 mit einem Abschlussbrett versehen wird. Mit 29 ist ein Brettermagazin vermerkt, in welchem Bretter bereitgestellt sind.
Wie schon eingangs erwähnt können Ausführungsbeispiele den EP 0 623 542 A1 und EP 1 199 275 A1 entnommen werden.
Die vorliegende Einrichtung 1 ist derart konstruiert, dass sie als Vollautomat hinter einer Druckmaschine einsetzbar ist.

## Patentansprüche

1. Einrichtung (1) zum Transport eines in einer Sammelvorrichtung (2) aus stehend aneinandergereihten Druckbogen (3) gebildeten, liegenden Stapels (4), von einer Stapelauflage (5) in eine Zwischenablage (6), **dadurch gekennzeichnet, dass** oberhalb der Stapelauflage (5) eine den Stapel (4) an den Enden zusammenpressende, senkrecht und horizontal verfahrbare Zange (10) angeordnet ist, die den Stapel (4) nach dessen Umreifung auf der Stapelauflage (5) von der Stapelauflage (5) in die benachbarte Zwischenablage (6) überführt.

2. Einrichtung (1) zum Transport eines in einer Sammelvorrichtung (2) aus stehend aneinandergereihten Druckbogen (3) gebildeten, liegenden Stapels (4), von einer Stapelauflage (5) in eine Zwischenablage (6), **dadurch gekennzeichnet, dass** oberhalb der Stapelauflage (5) eine den Stapel (4) an den Enden zusammenpressende, senkrecht und horizontal verfahrbare Zange (10) angeordnet ist, die den Stapel (4) von der Stapelauflage (5) über eine zum Umreifen bestimmte, benachbarte Umreifungsstation (11) in die anschliessende Zwischenablage (6) überführt.

3. Einrichtung (1) nach Anspruch 1 oder 2, **dadurch gekennzeichnet, dass** die aus zwei Klemmbacken (14, 15) bestehende Zange (10) an einem Traggestell (9) in einer ersten Förderrichtung (F) von der Stapelauflage (5) in die Zwischenablage (6) verfahrbar ist.

4. Einrichtung (1) nach Anspruch 3, **dadurch gekennzeichnet, dass** die Zwischenablage (6) als Palettierautomat ausgebildet ist.

5. Einrichtung (1) nach Anspruch 4, **dadurch gekennzeichnet, dass** die Zange (10) quer zur ersten Förderrichtung (F) an einem fahrbaren Brückenträger (16) verfahrbar ist.

6. Einrichtung (1) nach einem der Ansprüche 3 bis 5, **dadurch gekennzeichnet, dass** die Zange (10) um eine senkrechte Achse.drehbar ausgebildet ist.

7. Einrichtung (1) nach einem der Ansprüche 3 bis 6, **dadurch gekennzeichnet, dass** die Zange (10) an einem quer zur ersten Förderrichtung (F) angeordneten, fahrbar angetriebenen Brückenträger (16) hängend befestigt ist.

8. Einrichtung (1) nach Anspruch 7, **dadurch gekennzeichnet, dass** der Brückenträger (16) endseitig an mit dem Traggestell (9) verbundenen Bahnträgern (17, 18) fahrbar ausgebildet ist.

9. Einrichtung (1) nach Anspruch 8, **dadurch gekennzeichnet, dass** der Brückenträger (16) mit wenigstens einem endlos umlaufenden Zugmittel (19) antriebsverbunden ist.

10. Einrichtung (1) nach Anspruch 9, mit zwei den Brückenträger (16) entlang den Bahnträgern (17, 18) antreibenden Zugmitteln (19), **dadurch gekennzeichnet, dass** die Zugmittel (19) als Zahnriemen ausgebildet und mit einer gemeinsamen Antriebswelle (21) eines am Traggestell (9) befestigten Motors (20) antriebsverbunden sind.

11. Einrichtung (1) nach einem der Ansprüche 7 bis 10, **dadurch gekennzeichnet, dass** die Klemmbacken (14, 15) der Zange (10) an einem unterhalb des Brückenträgers (16), quer zur ersten Förderrichtung (F) sich erstreckenden, senkrecht antreibbar geführten Träger (22) verstellbar befestigt sind.

12. Einrichtung (1) nach Anspruch 11, **dadurch gekennzeichnet, dass** der Träger (22) mit einer an dem Brückenträger (16) befestigten Antriebsvorrichtung höhenverstellbar verbunden ist.

13. Einrichtung (1) nach einem der Ansprüche 11 und 12, **dadurch gekennzeichnet, dass** wenigstens eine der Klemmbacken (14, 15) der Zange (10) am Träger (22) beweglich ausgebildet ist.

14. Einrichtung (1) nach Anspruch 13, **dadurch gekennzeichnet, dass** die der beweglichen Klemmbacke (14, 15) gegenüberliegende Klemmbacke (14, 15) dem in Stapelbildungsrichtung entgegengesetzten Ende des Stapels (4) zugeordnet ist.

## Claims

1. Device (1) for transporting a stack (4) formed of vertically aligned printed sheets (3) situated in a gathering device (2) from a stack support (5) to an intermediate stacking unit (6), **characterised in that** a vertically and horizontally movable clamp (10) compressing the stack (4) at the ends is arranged above the stack support (5) and transfers the stack (4), once it has been strapped on the stack support (5), from the stack support (5) to the adjacent intermediate stacking unit (6).

2. Device (1) for transporting a stack (4) formed of vertically aligned printed sheets (3) situated in a gathering device (2) from a stack support (5) to an intermediate stacking unit (6), **characterised in that** a vertically and horizontally movable clamp (10) compressing the stack (4) at the ends is arranged above the stack support (5) and transfers the stack (4) from the stack support (5) via an adjacent strapping station (11) intended for strapping to the subsequent intermediate stacking unit (6).

3. Device (1) according to claim 1 or claim 2, **characterised in that** the clamp (10) consisting of two clamping jaws (14, 15) can be displaced on a supporting frame (9) in a first conveying direction (F) from the stack support (5) to the intermediate stacking unit (6).

4. Device (1) according to claim 3, **characterised in that** the intermediate stacking unit (6) is designed as an automatic palletiser.

5. Device (1) according to claim 4, **characterised in that** the clamp (10) can be displaced on a movable bridge support (16) transversely to the first conveying direction (F).

6. Device (1) according to one of claims 3 to 5, **characterised in that** the clamp (10) is designed to rotate about a vertical axis.

7. Device (1) according to one of claims 3 to 6, **characterised in that** the clamp (10) is suspended from a movably driven bridge support (16) arranged transversely to the first conveying direction (F).

8. Device (1) according to claim 7, **characterised in that** the bridge support (16) is designed to move at its ends on path supports (17, 18) connected to the supporting frame (9).

9. Device (1) according to claim 8, **characterised in that** the bridge support (16) is operatively connected to at least one endless traction means (19).

10. Device (1) according to claim 9, comprising two traction means (19) driving the bridge support (16) along the path supports (17, 18), **characterised in that** the traction means (19) are designed as toothed belts and are operatively connected to a common drive shaft (21) of a motor (20) fixed to the supporting frame (9).

11. Device (1) according to one of claims 7 to 10, **characterised in that** the clamping jaws (14, 15) of the clamp (10) are adjustably fixed to a support (22) guided in such a manner that it can be driven vertically extending below the bridge support (16) transversely to the first conveying direction (F).

12. Device (1) according to claim 11, **characterised in that** the support (22) is vertically adjustably connected to a drive device fixed to the bridge support (16).

13. Device (1) according to one of claims 11 and 12, **characterised in that** at least one of the clamping jaws (14, 15) of the clamp (10) is movable on the support (22).

14. Device (1) according to claim 13, **characterised in that** the clamping jaw (14, 15) situated opposite the movable clamping jaw (14, 15) is associated with the opposite end of the stack (4) in the stack-forming direction.

## Revendications

1. Dispositif (1) pour transporter une pile horizontale (4), formée dans un dispositif de regroupement (2) à partir de feuilles imprimées (3) juxtaposées sur chant, d'un support de pile (5) dans un dépôt intermédiaire (6), **caractérisé en ce qu'**une pince (10) mobile verticalement et horizontalement, comprimant la pile (4) aux extrémités, est disposée au-dessus du support de pile (5) et transfère la pile (4), une fois cerclée sur le support de pile (5), du support de pile (5) dans le dépôt intermédiaire voisin (6).

2. Dispositif (1) pour transporter une pile horizontale (4), formée dans un dispositif de regroupement (2) à partir de feuilles imprimées (3) juxtaposées sur chant, d'un support de pile (5) dans un dépôt intermédiaire (6), **caractérisé en ce qu'**une pince (10) mobile verticalement et horizontalement, comprimant la pile (4) aux extrémités, est disposée au-dessus du support de pile (5) et transfère la pile (4) du support de pile (5), en passant par un poste de cerclage voisin (11) destiné à effectuer le cerclage, dans le dépôt intermédiaire consécutif (6).

3. Dispositif (1) selon la revendication 1 ou 2, **caractérisé en ce que** la pince (10), constituée de deux mors de serrage (14, 15), peut être déplacée sur un bâti porteur (9) dans une première direction de transport (F) du support de pile (5) dans le dépôt intermédiaire (6).

4. Dispositif (1) selon la revendication 3, **caractérisé en ce que** le dépôt intermédiaire (6) est réalisé sous forme de palettiseur automatique.

5. Dispositif (1) selon la revendication 4, **caractérisé en ce que** la pince (10) peut être déplacée transversalement à la première direction de transport (F) sur un pont porteur mobile (16).

6. Dispositif (1) selon l'une des revendications 3 à 5, **caractérisé en ce que** la pince (10) est conçue rotative autour d'un axe vertical.

7. Dispositif (1) selon l'une des revendications 3 à 6, **caractérisé en ce que** la pince (10) est fixée en étant suspendue à un pont porteur (16) entraîné en déplacement, disposé transversalement à la première direction de transport (F).

8. Dispositif (1) selon la revendication 7, **caractérisé en ce que** le pont porteur (16) est conçu pour pouvoir être déplacé par ses extrémités sur des glissières porteuses (17, 18) assemblées au bâti porteur (9).

9. Dispositif (1) selon la revendication 8, **caractérisé en ce que** le pont porteur (16) est relié en entraînement à au moins un moyen de traction (19) circulant sans fin.

10. Dispositif (1) selon la revendication 9, avec deux moyens de,traction (19) entraînant le pont porteur (16) le long des glissières porteuses (17, 18), **caractérisé en ce que** les moyens de traction (19) sont réalisés sous la forme de courroies dentées et sont reliés en entraînement à un arbre d'entraînement commun (21) d'un moteur (20) fixé sur le bâti porteur (9).

11. Dispositif (1) selon l'une des revendications 7 à 10, **caractérisé en ce que** les mors de serrage (14, 15) de la pince (10) sont fixés avec possibilité de réglage sur un support (22) guidé en entraînement en direction verticale qui s'étend en dessous du pont porteur (16) transversalement à la première direction de transport (F).

12. Dispositif (1) selon la revendication 11, **caractérisé en ce que** le support (22) est relié avec possibilité de réglage en hauteur à un dispositif d'entraînement fixé sur le pont porteur (16).

13. Dispositif (1) selon l'une des revendications 11 et 12, **caractérisé en ce qu'**au moins un des mors de serrage (14, 15) de la pince (10) est conçu mobile sur le support (22).

14. Dispositif (1) selon la revendication 13, **caractérisé en ce que** le mors de serrage (14, 15) faisant face au mors de serrage mobile (14, 15) est associé à l'extrémité opposée de la pile (4) dans la direction de formation de la pile.
